# EUROPEAN PATENT APPLICATION

(11) **EP 1 880 607 A2**
(43) Date of publication of application: **23.01.2008**
(21) Application number: 06255165.0
(22) Date of filing: 06.10.2006
(51) Int. Cl.: A01K 83/00

(54) **Wormhook**

(30) Priority: 20.07.2006 JP 2006198058; 15.09.2006 JP 2006250647
(71) Applicant: Gamakatsu Co., Ltd., Nishiwaki-shi, Hyogo (JP)
(72) Inventor: Merritt, Jimmy, North Carolina (US)
(74) Representative: White, Duncan Rohan

(57) **Abstract**

A wormhook capable of drastically improving a fishing result by reliably preventing "displacement" of a worm is provided. In a wormhook (10), a shank (18), an upper bend (20), a heel of bend (22), and a throat (24) are formed between a line eye (14) to which a fishing line is bound and a hook point (16), a fixing part (26) is formed in a vicinity of the line eye (14) by bending the shank (18) in two stages, one end portion of a worm (12) is fixed to the fixing part (26), a central portion or the other end portion of the worm (12) is fixed to the heel of bend (22) or the throat (24). An angle α, which is formed by a direction a toward a first curved portion (32) of the fixing part (26) from the line eye (14) and a direction b toward a second curved portion (34) from the first curved portion (32) is set at 90 degrees or less, and between the fixing part (26) and the upper bend (20), a displacement preventing part (30) having an contact part (28) which contacts the worm (12) is formed by bending the shank (18).

## Description

### BACKGROUND OF THE INVENTION

### Field of the Invention

The present invention relates to a wormhook having the function of preventing "displacement" of the worm.

### Description of the Related Art.

As baits used for lure fishing, there are various kinds of baits such as metal jigs, spinner baits and worms, and among them, the worms are formed of vulnerable materials exhibiting rubber elasticity. And they have the disadvantage of lacking in durability. Therefore, worms and wormhooks are separately sold on the market, and thus, anglers perform an operation of attaching worms to wormhooks. When the worms are damaged, the anglers properly replace them.

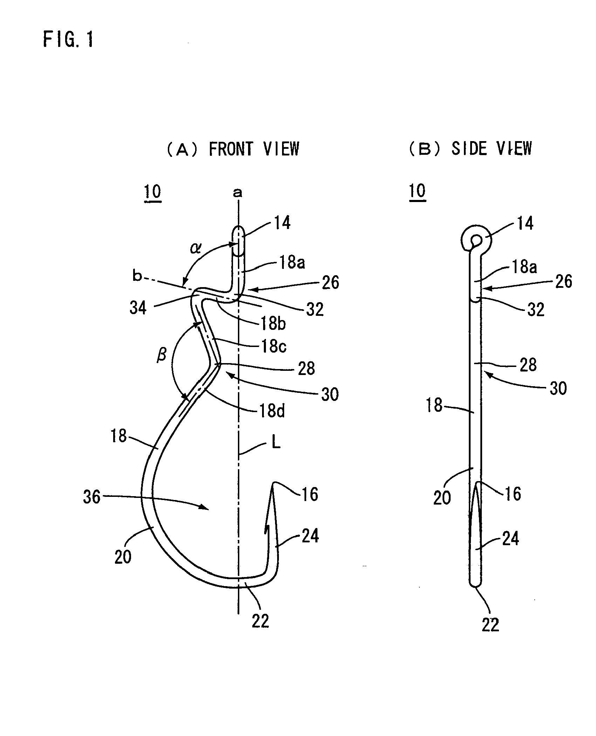

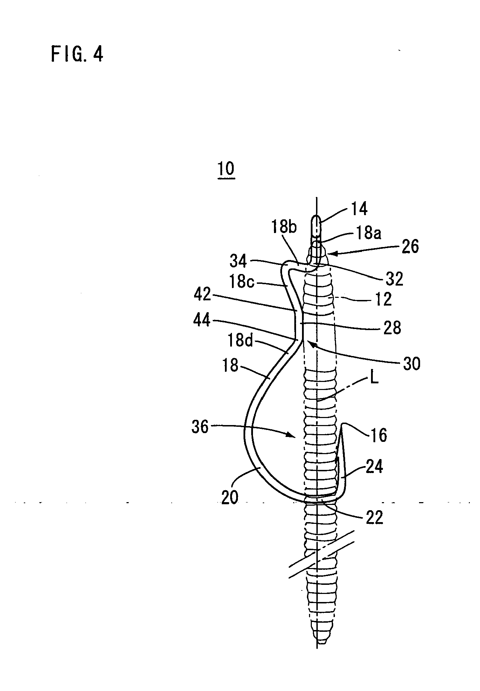

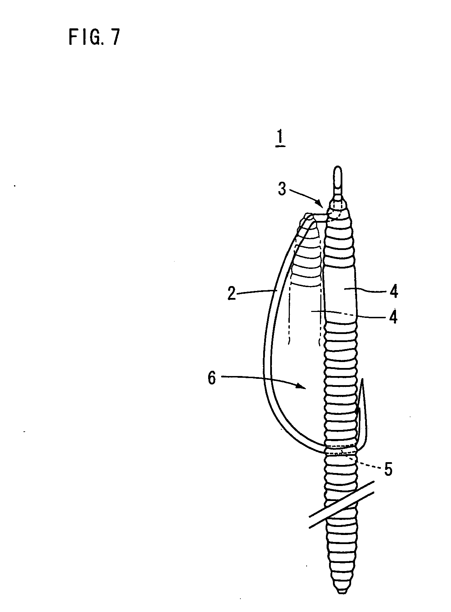

A conventional ordinary wormhook 1 has a substantially L-shaped fixing part 3 formed at an end portion of a shank 2 as shown in FIG. 7. And when it is in use, one end portion of a worm 4 is fixed to the fixing part 3, and the central portion or the other end portion of the worm 4 is fixed to a heel of bend 5 (see Patent Document 1: Japanese Non-examined Patent publication No. 11-113446 (FIG.1, FIG.4)). Therefore, according to the wormhook 1, the worm 4 can be held in a natural state by the fixing part 3 and the heel of bend 5, and the worm 4 can behave naturally as if it were a natural bait.

In the conventional wormhook 1 (Patent Document 1), the one end portion of the worm 4 can be fixed by the fixing portion 3. But the wormhook 1 does not have the structure which positively prevents "displacement" of the worm 4, so that "displacement" of the worm 4 cannot be reliably prevented. Therefore, when the casting method in which the worm 4 vigorously collides with a water surface such as "skipping" is used, the worm 4 is pushed into a back side of a gape 6 by impact received from the water surface as shown by the two-dot chain line in FIG. 7. And there is the fear that natural behavior of the worm 4 is impaired, and the fishing result becomes poor.

### SUMMARY OF THE INVENTION

An obj ect of the present invention is to provide a wormhook which can drastically improve a fishing result by reliably preventing "displacement" of the worm.

In a first aspect of the present invention, a wormhook 10 in which a shank 18, an upper bend 20, a heel of bend 22, and a throat 24 are formed between a line eye 14 to which a fishing line is bound and a hook point 16, a fixing part 26 is formed in a vicinity of the line eye 14 by bending the shank 18 in two stages, one end portion of a worm 12 is fixed to the fixing part 26, a central portion or the other end portion of the worm 12 is fixed to the heel of bend 22 or the throat 24, wherein an angle α, which is formed by a direction a toward a first curved portion 32 of the fixing part 26 from the line eye 14 and a direction b toward a second curved portion 34 from the first curved portion 32, is set at 90 degrees or less, and between the fixing part 26 and the upper bend 20, a displacement preventing part 30 having an contact part 28 which contacts the worm 12 is formed by bending the shank 18.

In this invention, the angle α, which is formed by the direction a toward the first curved portion 32 of the fixing part 26 from the line eye 14 and the direction b toward the second curved portion 34 from the first curved portion 32, is set at 90 degrees or less. Therefore, the shape of the fixing part 26 is in a substantially hook shape. Accordingly, one end portion of the worm 12 which is fixed to the fixing part 26 does not easily displace. Further, between the fixing part 26 and the upper bend 20, the displacement preventing part 30 having the contact part 28 which contacts the worm 12 is formed. Therefore, even when the worm 12 receives impact from a water surface 38 or the like, the worm 12 does not displace to the back side of a gape 36.

In a second aspect of the present invention, "the wormhook 10 as claimed in claim 1, wherein when a reference line L which passes through the line eye 14 and the heel of bend 22 is assumed, the contact part 28 is disposed at the reference line L side from the second curved portion 34."

In this invention, the contact part 28 is disposed at the reference line L side from the second curved portion 34. Therefore, the central portion of the worm 12 contacts the contact part 28 before one end portion of the worm 12 reaches the second curved portion 34. Accordingly, the one end portion of the worm 12 can be effectively prevented from displacing past the second curved portion 34.

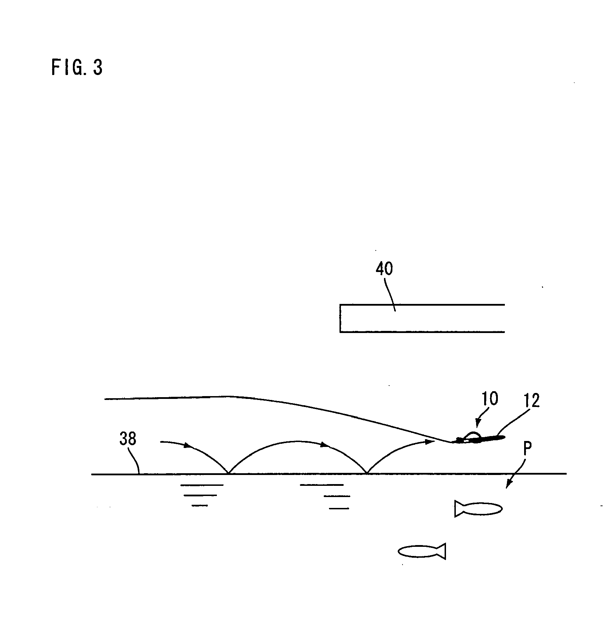

According to the first aspect and the second aspect of the present invention, "displacement" of the worm 12 can be reliably prevented. Therefore, the worm 12 always be able to behave naturally, and the fishing result can be drastically improved. Even in the case of using the casting method such as "skipping", in which the worm 12 vigorously collides with the water surface 38 (FIG. 3), "displacement" of the worm 12 hardly occurs. Thus, stable fishing result can be expected.

Other and further objects, features and advantages of the invention will appear more fully from the following description.

### BRIEF DESCRIPTION OF THE DRAWINGS

FIGS. 1A and 1B are a front view and a side view showing a wormhook embodying the invention;
FIG. 2 is a front view showing a use state of the wormhook in FIGS. 1A and 1B;
FIG. 3 is a view showing a casting method (skipping) using the wormhook in FIGS. 1A and 1B;
FIG. 4 is a front view showing another wormhook embodying the invention (an contact part 28 is in a linear shape);
FIG. 5 is a front view showing another wormhook embodying the invention (with a shank portion 18e);
FIG. 6 is a front view showing another wormhook embodying the invention (an upper shank portion also forms the contact part); and
FIG. 7 is a front view showing a conventional wormhook.

### Description of Symbols

- 10: wormhook
- 12: worm
- 14: line eye
- 16: hook point
- 18: shank
- 18a, 18b, 18e: shank portion
- 18c: upper shank portion
- 18d: lower shank portion
- 20: upper bend
- 22: heel of bend
- 24: throat
- 26: fixing part
- 28: contact part
- 30: displacement preventing part
- 32: first curved portion
- 34: second curved portion
- 36: gape
- 38: water surface
- 40: obstacle
- 42, 44: curved portion

### DETAILED DESCRIPTION OF THE INVENTION

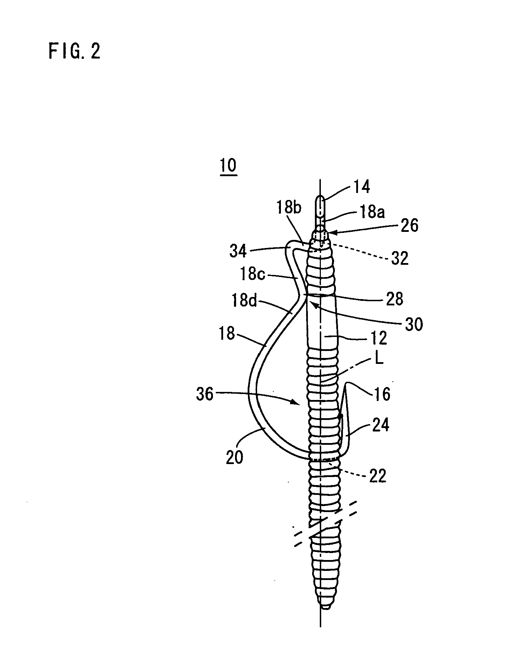

FIGS. 1A and 1B are a front view and a side view showing a wormhook 10 embodying the present invention. The wormhook 10 is a fishhook exclusively for a worm. And the wormhook fixes one linear worm 12 in a linearly straightened state, as shown in FIG. 2.

In this case, the worm 12 (FIG. 2) is a lure exhibiting rubbery elasticity which is on the market. And those in shapes, sizes and colors imitating natural baits such as an earthworm or a minnow, and those in the shapes, sizes and colors which do not naturally exist are properly used in accordance with the kind of fish, the natural conditions or the like.

The wormhook 10 has a line eye 14 to which a fishing line (not shown in the drawing) is bound, and a hook point 16, and a shank 18, an upper bend 20, a heel of bend 22, and a throat 24 are formed in the same plane, between the line eye 14 and the hook point 16. In the vicinity of the line eye 14, a fixing part 26 is formed by bending the shank 18 in two stages, and between the fixing part 26 and the upper bend 20, a displacement preventing part 30 having an contact part 28 which contacts on the worm 12 is formed by bending the shank 18.

The fixing part 26 is constituted of a curvilinear curved portion of the first curved portion 32, a curvilinear curved portion of the second curved portion 34, a linear shank portion 18a which reaches the first curved portion 32 from the line eye 14, and a linear shank portion 18b which reaches the second curved portion 34 from the first curved portion 32. And an angle α, which is formed by a direction a toward the first curved portion 32 from the line eye 14 and a direction b toward the second curved portion 34 from the first curved portion 32, is set at 90 degrees or less. In other words, the angle α formed by the direction a in which the shank portion 18a extends and the direction b in which the shank portion 18b extends is set at 90 degrees or less. Accordingly, the shape of the fixing part 26 is in a substantially hook shape which is suitable for fixing one end portion (upper end portion) of the worm 12.

When a reference line L (FIG. 1A) which passes through the line eye 14 and the heel of bend 22 is assumed, the shank portion 18a of the fixing part 26 is disposed substantially parallel with the reference line L, and the first curved portion 32 is curved to the upper bend 20 side from the reference line L. Therefore, when the one end portion of the worm 12 is fixed - to-the shank portion 18a of the fixing part 26, and when a central portion of the worm 12 is fixed to the heel of bend 22 or the throat 24, the first curved portion 32 of the fixing part 26 is disposed inside the worm 12, and the shank portion 18b is led to an outside to the upper bend 20 side from the inside of the worm 12, and the second stage curved portion 34 is disposed at the outside of the worm 12 at the upper bend 20 side. Therefore, in the one end portion (upper end portion) of the worm 12 which is fixed to the fixing part 26, "displacement" in the lateral direction is prevented by the shankportion 18a, and "displacement" in the vertical direction is prevented by the shank portion 18b.

The displacement preventing part 30 is constituted of a linear upper shank portion 18c, the curvilinear contact part 28 and a linear lower shank portion 18d into a bent line form bent to project to the reference line L side. The contact part 28 prevents the worm 12 from displacing to the back side of the gape 36 by contacting the worm 12, and the relative position of the contact part 28 in the wormhook 10 is set at the reference line L side from the second curved portion 34 of the fixing part 26, and at the upper bend 20 side from the first curved portion 32.

The reason why the contact part 28 is disposed at the reference line L side from the second curved portion 34 is to reliably prevent the one end portion of the worm 12 from displacing past the second curved portion 34 by causing the central portion of the worm 12 to abut on the contact part - 28 before the one end portion of the worm 12 displaces laterally and reaches the second curved portion 34. The reason why the contact part 28 is disposed at the upper bend 20 side from the first curved portion 32 is to prevent the natural shape (linear shape) of the worm 12 from being impaired by avoiding undesirable interference of the contact part 28 and the worm 12.

When the worm 12 is attached to the wormhook 10 (FIGS. 1A and 1B), the hook point 16 is penetrated into the one end portion (upper end portion) of the worm 12 in a substantially L shape, and the hook point 16 is further penetrated through the central portion or the other end portion of the worm 12. Subsequently, in order that the shape of the worm 12 is in a natural shape (linear shape), the one end portion of the worm 12 is positioned to the fixing part 26, and the central portion or the other end portion of the worm 12 is positioned to the predetermined spot of the heel of bend 22. In the central portion or the other end portion of the worm 12, the hook point 16 may be buried inside the worm 12 without being penetrated through it. In this case, the central portion or the other end portion of the worm 12 is fixed to the throat 24.

In lure fishing using the worm 12, the fishing result significantly changes depending on whether "the wormhook 10 and the worm 12", in other words "the gadget" can be accurately cast into the point or not. Therefore, an angler makes efforts to obtain an excellent fishing result by using various casting methods. For example, when an obstacle 40 exists on a water surface 38 as shown in FIG. 3, and a "gadget" is cast into the point P below the obstacle 40 while bouncing the "gadget", on the water surface 38 by the casting method called "skipping" . When "skipping" is used, the worm 12 receives strong impact from the water surface 38 when the "gadget" bounces on the water surface 38. However, according to the wormhook 10 of this embodiment, "displacement" of the worm 12 can be reliably prevented by the fixing part 2 6 and the displacement preventing part 30. Therefore, the worm 12 is not deformed undesirably by the impact, and the worm 12 can behave naturally in the water.

In the above described embodiment, the shank portions 18a and 18b which constitute the fixing part 26, and the upper shank portion 18c and the lower shank portion 18d which constitute the displacement preventing part 30 are formed in the linear shapes, but these may be formed into curved shapes having prescribed curvatures. In the above described embodiment, the contact part 28 which constitutes the displacement preventing part 30 is formed into the curvilinear shape, but the contact part 28 may be formed into the linear shape sandwiched by two curvilinear curved portions 42 and 44 as shown in FIG. 4.

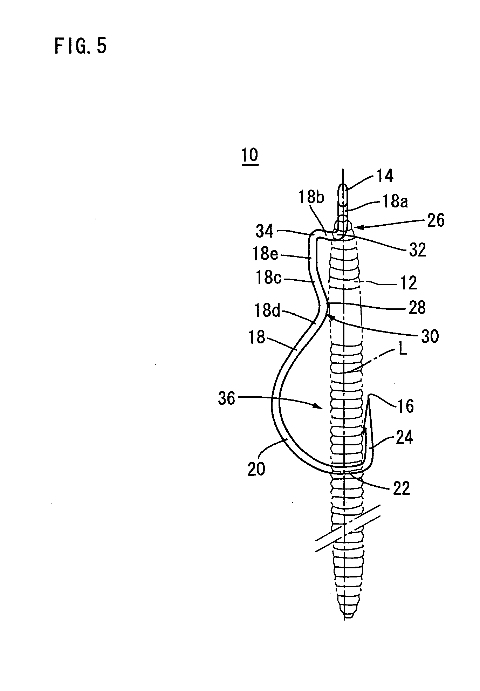

In the above described embodiment, the upper shank portion 18c which constitutes the displacement preventing part 30 is formed continuously from the second curved portion 34 which constitutes the fixing part 26. But between the upper shank portion 18c and the second curved portion 34, a linear shank portion 18e substantially parallel with the reference line L may be formed as shown in FIG. 5, or a linear shank portion (not shown) which inclines at a predetermined angle with respect to the reference line L, or a curvilinear shank portion (not shown) curved with a predetermined curvature may be formed.

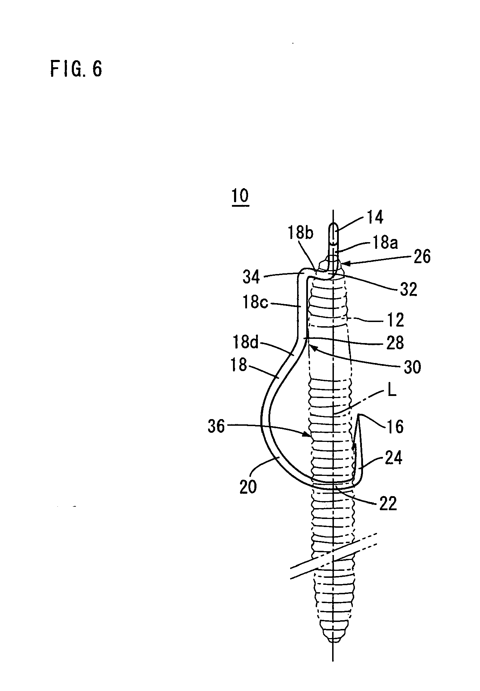

Further, in the above described embodiment, the position of the contact part 28 which constitutes the displacement preventing part 30 is set at the reference line L side from the second curved portion 34 which constitutes the fixing part 26. However, when the thick worm 12 is used, the distance to the reference line L from the contact part 28 and the distance to the reference line L from the second curved portion 34 may be set to be substantially the same as shown in FIG. 6. In this case, the central portion of the worm 12 can be caused to contact on the contact part 28 before the one end portion of the worm 12 laterally displaces and reaches the second curved portion 34. Therefore, the one end portion of the worm 12 can be reliably prevented from displacing past the second curved portion 34. In the embodiment shown in FIG. 6, the contact part 28 is located at the position away from the reference line L as compared with the embodiment in FIGS. 1A and 1B, so that the upper shank portion 18c is substantially parallel with the reference line L. Therefore, in the embodiment in FIG. 6, not only the contact part 28, but also the upper shank portion 18c is also "contact part" which contacts the worm 12.

## Claims

1. A wormhook (10) in which a shank (18), an upper bend (20), a heel of bend(22), and a throat (24) are formed between a line eye (14) to which a fishing line is bound and a hook point (16), a fixing part (26) is formed in a vicinity of the line eye (14) by bending the shank (18) in two stages, one end portion of a worm (12) is fixed to the fixing part (26), a central portion or the other end portion of the worm (12) is fixed to the heel of bend (22) or the throat (24),
wherein an angle, which is formed by a direction toward a first curved portion (32) of the fixing part (26) from the line eye (14) and a direction toward a second curved portion (34) from the first curved portion (32), is set at 90 degrees or less, and between the fixing part (26) and the upper bend (20), a displacement preventing part (30) having an contact part (28) which contacts the worm (12) is formed by bending the shank (18).

2. The wormhook (10) as claimed in claim 1,
wherein when a reference line (L) which passes through the line eye (14) and the heel of bend (22) is assumed, the contact part (28) is disposed at the reference line (L) side from the second curved portion (34).
